Europäisches Patentamt

European Patent Office

Office européen des brevets

(11) Numéro de publication: **0 009 452**
**B1**

(12) FASCICULE DE BREVET EUROPEEN

(45) Date de publication du fascicule du brevet: **29.06.83**

(51) Int. Cl.³: **G 01 P 3/68**

(21) Numéro de dépôt: **79400661.9**

(22) Date de dépôt: **19.09.79**

(54) Dispositif de mesure de vitesse d'un produit en défilement par la méthode de corrélation.

(30) Priorité: **21.09.78 FR 7827035**

(43) Date de publication de la demande:
**02.04.80 Bulletin 80/7**

(45) Mention de la délivrance du brevet:
**29.06.83 Bulletin 83/26**

(84) Etats contractants désignés:
**BE DE GB IT LU**

(56) Documents cités:
**FR - A - 2 025 826**
**FR - A - 2 161 757**
**GB - A - 964 581**
**US - A - 3 156 817**
**US - A - 3 885 873**

(73) Titulaire: **INSTITUT DE RECHERCHES DE LA SIDERURGIE FRANCAISE (IRSID) France**
**185, rue Président Roosevelt**
**F-78105 Saint-Germain-en-Laye (FR)**

(72) Inventeur: **Petit, Pierre**
**6, Chemin des Pavillons**
**Semécourt F-57210 Maizieres-les-Metz (FR)**
Inventeur: **Verjux, Pierre**
**5, rue Jacquemin**
**Semécourt F-57210 Maizieres-les-Metz (FR)**

(74) Mandataire: **Tuppin, Claude et al,**
**INSTITUT DE RECHERCHES DE LA SIDERURGIE FRANCAISE (IRSID) 185, rue Président Roosevelt F-78105 Saint-Germain-en-Laye (FR)**

Courier Press, Leamington Spa, England.

### Dispositif de mesure de vitesse d'un produit en défilement par la méthode de corrélation

La présente invention a trait à la mesure de vitesse de produits en défilement par inter-corrélation de deux signaux aléatoires décalés dans le temps et liés au produit en déplacement.

Les dispositifs de mesure de vitesse par corrélation comportent généralement deux organes de détection disposés au voisinage du produit dont on veut mesurer la vitesse de défilement, décalés l'un par rapport à l'autre dans le sens de défilement du produit. Les organes de détection enregistrent deux signaux statistiquement identiques, mais décalés dans le temps d'un intervalle dépendant de la distance séparant lesdits organes de détection et de la vitesse de défilement du produit. On peut comparer ces signaux par la méthode de corrélation, méthode bien connue dans la technique considérée, selon laquelle on forme une fonction dite "fonction d'intercorrélation" présentant un maximum ou pic de corrélation, dont la position dépend de l'intervalle de temps entre les signaux détectés et, par conséquent, de la vitesse du produit.

On forme la fonction d'intercorrélation de deux signaux décalés l'un par rapport à l'autre en introduisant, après mise en forme, lesdits signaux dans un dispositif nommé "corrélateur" dont plusieurs types sont déjà connus dans le commerce, un tel corrélateur présentant toujours les fonctions suivantes sous une forme ou sous une autre: retard, produit, intégration.

Dans le cas du laminage de produits tels que brames, billettes, tôles ou profilés divers, il est utile de connaître avec précision la vitesse du produit laminé, en particulier lorsqu'on veut introduire la mesure de cette vitesse comme donnée d'entrée dans un système d'automatisation du laminoir.

Afin d'éviter d'avoir à former la totalité de la courbe, ce qui est surabondant puisque seule la position du pic présente de l'intérêt, il a été proposé d'utiliser l'information disponible à la sortie du corrélateur sous la forme d'un signal d'erreur agissant sur un dispositif de commande du retard de façon à asservir ledit retard en vue de la bloquer sur la valeur pour laquelle on obtient le pic de corrélation.

Dans la demande de brevet français publiée nº 2.161.757 (IRSID), on décrit un dispositif de mise en oeuvre de ce type comprenant deux organes de détection décalés dans l'espace et connectés par l'intermédiaire d'une unité de mise en forme du signal à l'entrée d'un corrélateur à retard asservi comprenant un registre à décalage, un étage de multiplication, un étage d'intégration et un amplificateur différentiel, ledit retard étant asservi, par l'intermédiaire d'un convertisseur tension-période ou horloge pilotant le corrélateur, à un signal élaboré par un sommateur connecté à la sortie du corrélateur, et comprenant également un indicateur de vitesse relié audit convertisseur et des moyens fournissant une valeur approximative de la vitesse du produit pour positionner le retard initial du corrélateur et reliés à la seconde entrée du sommateur.

Dans la pratique, cette technique est bien adaptée au cas de produits dont la vitesse de défilement est régulière ou faiblement variable, mais elle comporte un risque de disparition complète de la courbe représentative de la fonction d'intercorrélation lorsque la vitesse du produit varie brutalement et que l'amplitude de variation est importante, comme c'est le cas au cours du laminage à froid de bandes métalliques.

Le but de la présente invention est de remédier à de tels inconvénients.

A cet effet, l'invention a pour objet un dispositif de mesure de vitesse d'un produit en défilement comprenant:

— deux organes de détection situés en face du produit et décalés dans l'espace, dans le sens du défilement du produit, lesdits organes de détection fournissant deux signaux aléatoires décalés dans le temps et liés au produit en défilement,

— deux unités de mise en forme dont chacune reçoit l'un des signaux aléatoires,

— un corrélateur branché aux sorties desdites unités et comportant successivement:

    — un registre à décalage recevant le signal de sortie d'une desdites unités, ledit registre ayant deux sorties de prélèvement sur deux étages non-consécutifs,

    — une étage de multiplication servant à multiplier chacun des signaux provenant de la première et de la deuxième sorties du registre à décalage avec le signal de sortie de l'autre desdites unités,

    — un amplificateur différentiel recevant les deux produits formés par l'étage de multiplication,

    — un intégrateur branché à la sortie de l'amplificateur différentiel,

— des moyens de mesure de vitesse indépendants du corrélateur fournissant une valeur approximative de la vitesse du produit,

— une boucle d'asservissement du retard du registre à décalage au signal de sortie du corrélateur comprenant:

    — un sommateur dont une entrée est connectée à la sortie de l'intégrateur et dont une autre entrée est connectée à la sortie desdits moyens de mesure de vitesse,

    — un convertisseur tension-période dont l'entrée est connectée à la sortie du sommateur et dont la sortie est connectée au registre à décalage,

    — un indicateur de vitesse du produit relié audit convertisseur,

— dispositif caractérisé en ce qu'il comprend en outre un système pour asservir le gain de boucle d'asservissement à la vitesse du produit, ledit système étant choisi dans le groupe formé par les trois types de systèmes suivants:

1—système du type comportant un multiplieur dont une entrée est reliée à la sortie de l'intégrateur, l'autre entrée étant reliée à la sortie des moyens de mesure de vitesse indépendants du corrélateur, et dont la sortie est reliée à l'entrée du sommateur;

2—système du type comportant une thermistance, laquelle constitue la partie résistive de l'intégrateur, les moyens de mesure de vitesse indépendants du corrélateur, fournissant un courant de chauffe pour ladite thermistance;

3—système du type comportant une batterie de condensateurs montés en parallèle et de capacités différentes entre-elles, ladite batterie constituant la partie capacitive de l'intégrateur, et une unité de commande à seuils multiples pour activer l'un ou l'autre desdits condensateurs en fonction du signal fourni par les moyens de mesure de vitesse indépendants du corrélateur.

La méthode de corrélation permet de déterminer une vitesse moyenne pendant le temps d'intégration. Ce dernier fixe ainsi les performances dynamiques du système, c'est-à-dire son temps de réponse.

Le choix du temps d'intégration, qui en pratique ne peut-être infini, est compromis entre la précision et la rapidité souhaitée du calcul de la fonction d'intercorrélation, qui dépend au premier chef de la quantité de produit à faire passer sous les détecteurs (par exemple 1m) pour avoir un nombre suffisant d'informations correspondant à un résultat statistique significatif.

Habituellement, on choisit les caractéristiques R.C. de l'intégrateur en fonction de la connaissance que l'on a à priori de la vitesse du produit. Ainsi on est amené à fixer la constante de temps R.C. de l'intégrateur sur la vitesse la plus basse que l'on va être amené à mesurer. Tant que la vitesse de défilement est invariable, ou varie faiblement autour d'une valeur donnée, le système est capable de fournir les réponses qu'on attend de lui. Par contre si le produit est susceptible de prendre des vitesses variables dans une fouchette assez large, le retard entre les deux signaux va varier au cours de la période d'intégration et la boucle d'asservissement va être très lente à rattraper ce retard, ou va même ne pas le rattraper du tout, pour peu que les variations de vitesses soient brutales et fréquentes.

L'incapacité du système se traduit alors par un affaissement du pic de la courbe d'intercorrélation et la disparition de ce pic si la variation de vitesse est trop rapide. Cette disparition peut n'être que momentanée si la vitesse se stabilise suffisament à son nouveau niveau, mais elle peut-être également permanente si ces variations sont fréquentes. Tel est le cas des laminoirs à froid où la bande passe d'une vitesse initiale nulle à une vitesse nominale sous l'effet d'une accélération constante.

Comme on l'aura déjà compris, la présente invention résoud un tel problème en conférant au système d'asservissement du retard un gain de boucle variable, lui-même asservi aux variations de vitesse grâce à des moyens de mesure de vitesse du produit en défilement indépendants du corrélateur.

Ainsi l'invention permet d'ajuster en permanence le temps de réponse du système de mesure aux différentes valeurs prises par la vitesse du produit et transforme donc un système connu à caractère statique en un système dynamique dont elle améliore la capacité à suivre les variations rapides et fréquentes de la vitesse du produit à surveiller.

L'invention sera bien comprise et d'autres aspects et avantages ressortiront plus clairement au vu de la description qui suit donnée en référence aux planches de dessins annexées sur lesquelles:

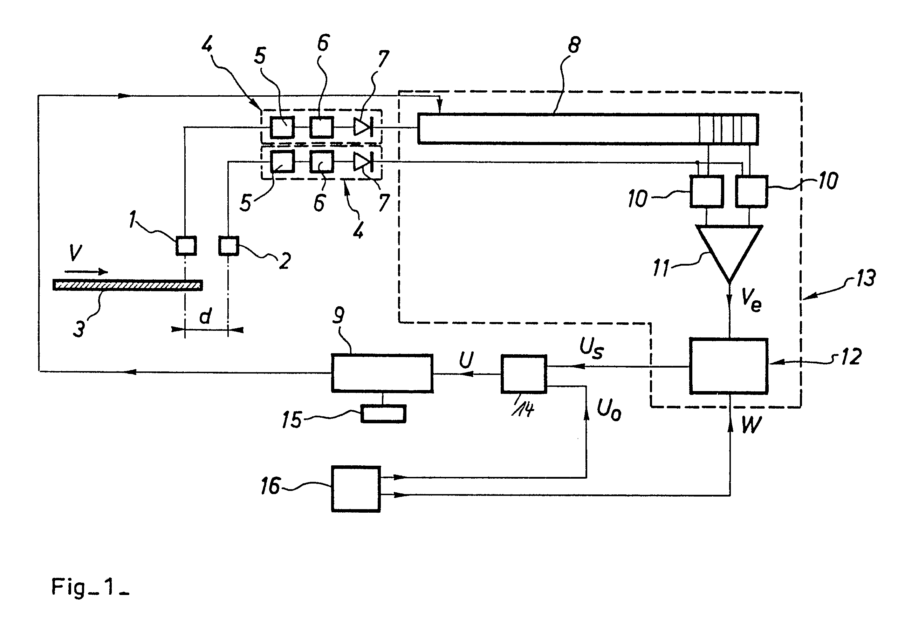

— lat figure 1 représente un schéma général du dispositif de mesure pour la mise en application du procédé,

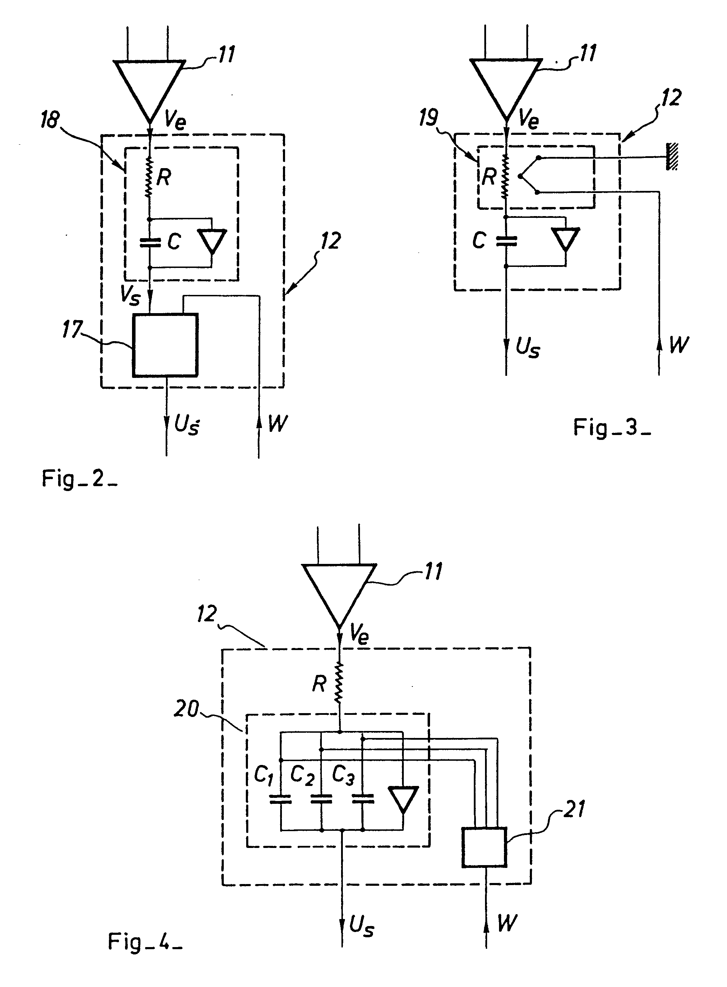

— les figure 2, 3, 4 représentent chacune une variante possible de réalisation des moyens de mise en oeuvre de l'invention.

En se reportant à la figure 1, deux organes de détection de signaux référencés respectivement 1 et 2 sont disposés au voisinage d'un produit en défilement 3 et décalés d'une distance "d" l'un par rapport à l'autre dans le sens de déplacement dudit produit indiqué par la flèche. Ce produit peut-être laminé ou en cours de laminage. Sa surface présente alors des irrégularités. L'énergie lumineuse qu'il émet s'il est chaud, ou si on l'éclaire avec un projecteur, varie donc au cours du défilement. Les organes de détection consistent chacun en un récepteur photoélectrique visant le produit en mouvement et fournissant un signal électrique f(t) image de la luminance f(x) du produit suivant un axe parallèle au vecteur vitesse, les grandeurs x et t étant reliées par la relation,

$$x = vt$$

où t est le temps et v la vitesse du produit. On détecte par conséquent deux signaux semblables X(t) et Y(t). Le récepteur photoélectrique consiste en une cellule photovoltaïque au silicium, associée à un diaphragme, constitué par un miroir légèrement incliné et comportant une fente perpendiculaire au sens de défilement du produit, et à un objectif, de façon à former l'image d'un élément de surface de produit sur la cellule. L'ensemble comprenant le récepteur, le diaphragme et l'objectif constitue une lunette. Deux lunettes identiques sont montées sur un support, la distance de

leurs axes optiques pouvant être définie avec précision en recueillant les faisceaux de lumière réfléchis par les miroirs inclinés et en visant une mire graduée.

Les signaux en provenance des organes de détection, éventuellement amplifiés, sont ensuite traités chacun dans des unités de mise en forme 4 comprenant un filtre passe-haut 5 de façon à éliminer les composantes à fréquences basses dues aux ondulations du produit en défilement et aux parasites à fréquence industrielle, et à ne conserver que les composantes utiles correspondant aux irrégularités de luminance du produit. Ce filtre peut consister en un circuit R.C. à capacité variable permettant de régler la fréquence de "coupure basse" entre 50 et 1000 Hz. Les signaux ainsi filtrés sont ensuite introduits respectivement dans une bascule 6 délivrant à sa sortie des signaux ne pouvant prendre que deux valeurs égales et de signes contraires, la valeur positive correspondant par exemple à un signal d'entrée passant par zéro en croissant, la valeur négative correspondant alors à un signal d'entrée passant par zéro en décroissant. Après élimination des parties négatives respectives des signaux de sortie du circuit à seuil par une diode 7 on obtient des trains d'impulsions "tout ou rien", le niveau "1" correspondant à un signal positif, le niveau "0" correspondant à un signal négatif. Le niveau "1" peut-être fixé à une tension désirée par un diviseur. A la sortie des unités 4, on dispose alors de deux signaux X(t) et Y(t) consistant en des trains d'impulsions aléatoires statistiquement semblables aux signaux détectés, le signal X(t) correspondant au signal détecté par l'organe de détection 1 disposé en amont par rapport au sens de défilement du produit, le signal Y(t) correspondant au signal détecté en aval. On rappelle que ces deux signaux sont indentiques et décalés dans le temps d'un intervalle dépendant de la distance "d" et de la vitesse "v" définies précédemment. Pour former la fonction d'intercorrélation de X(t) et Y(t), on envoie le signal X(t) dans un dispositif de retard introduisant un retard $\tau$ et on forme l'intégrale du produit $x(t-\tau) . Y(t)$, soit C(XY). Le dispositif à retard consiste en un registre à décalage 8 piloté par une horloge à fréquence variable 9. Ce registre comprend n étages, chaque étage recevant une quantité d'information de un bit, ledit registre comportant des sorties de prélèvement du signal retardé, par exemple sur les étages n et n-4 symétriques par rapport à l'étage n-2. Ce registre est constitué dans le cas décrit par un registre de 205 bits muni d'une sortie de prélèvement sur les étages 201 et 205. Un étage de multiplication 10 est disposé respectivement à chaque sortie de prélèvement dudit registre de façon à former les produits

$$Y(t) . X_{201}(t) \text{ et } Y(t) . X_{205}(t).$$

Les deux produits sont intégrés puis soustraits l'un de l'autre, ou de préférence d'abord soustraits et le résultat obtenu intégré, respectivement dans un amplificateur différentiel à grand gain 11 et une unité d'intégration 12 à l'aide de circuits R.C.

L'ensemble composé par le registre à décalage 8, les étages de multiplication 10, l'amplificateur différentiel 11 et l'unité d'intégration 12, constitué un corrélateur référencé 13.

La sortie du corrélateur 13 est connectée, par l'intermédiaire d'un sommateur 14, à un convertisseur tension-période 9 relié à un indicateur de vitesse 15, ledit convertisseur étant utilisé comme horloge de commande du registre à décalage 8, de façon à constituer une boucle d'asservissement du retard.

La seconde entrée du sommateur 14 reçoit une valeur de consigne Uo. Cette valeur conditionne la fréquence initiale de l'horloge 9. Au départ, la tension de consigne Uo se traduit, à la sortie du convertisseur 9, par un signal représentatif de la période de l'horloge, tel que le signal $X._{203}(t)$ (contenu dans l'étage 203 équidistant des étages 201 et 205) soit exactement en phase avec Y(t). La courbe représentative de la fonction d'intercorrélation étant au moins au voisinage du pic, parfaitement symétrique. Initialement la valeur de la fonction, calculée à partir de l'étage 201, est égale à celle calculée à partir de l'étage 205.

Le système fonctionne donc si, au départ, le signal correspondant au pic de corrélation se situe dans un étage situé entre les deux étages de sortie 201 et 205, c'est-à-dire si la valeur de consigne Uo est représentative de la vitesse initiale du produit.

On comprend que la connaissance de cette vitesse initiale peut être approximative, la plage de tolérance étant fonction de l'éloignement entre les deux étages de prélèvement du registre de décalage. En toute regueur, cet éloignement n'est pas imposé et peut être choisi aussi important que l'on veut. Toutefois, il conditionne la précision des résultats obtenus, car il se traduit bien entendu par un éloignement correspondant des deux points calculés par rapport à la position du pic de la courbe de corrélation, laquelle perd sa symétrie d'autant plus qu'on se rapproche de ses extrémités.

Le choix des deux étages de prélèvement résulte donc d'un compromis entre la précision souhaitée des résultats obtenus et la précision dont on dispose au départ sur la valeur de la vitesse initiale.

Cette dernière peut être déterminée par tout moyen approprié: sa connaissance à priori, même grossiètre de la part de l'opérateur (consigne manuelle); sa mesure par des moyens traditionnels, tels qu'une dynamo tachymétrique équipant les cylindres de laminage; ou des instruments plus sophistiqués surveillant, dans le cas d'un produit discontinu, le passage de la tête de ce dernier (demande de brevet français n° 2.161.757 déjà cité).

Ces moyens ne faisant pas en eux-mêmes partie de l'objet propre de l'invention, on les a simplement représentés sur la figures sous la référence 16 en tant que moyens pour fournir une valeur de consigne Uo qui s'additionne dans le sommateur 14 au signal de sortie du corrélateur désigné par Us.

Ce signal de sortie Us (ou signal d'erreur) est proportionnel à la différence entre les deux valeurs calculées de la fonction de corrélation C(XY), soit $C_{201}(XY)$ et $C_{205}(XY)$. Il reflète donc la dissymétrie des deux points calculés sur la sourbe de corrélation de part et d'autre du pic.

Le convertisseur tension-période élabore, à partir du signal de sortie du sommateur 14, une nouvelle fréquence de pilotage du registre à décalage 8, telle que cette dissymétrie soit annulée. Le signal dans l'étage 203 est alors en phase avec Y(t) et le retard correspondant fournit la vitesse du produit par lecture directe sur l'indicateur 15.

Le dispositif indicateur de vitesse 15 est constitué par un fréquencemètre muni d'un diviseur approprié et connecté à la sortie de l'horloge 9. Il permet d'afficher la valeur exacte de la vitesse pendant toute la durée de défilement du produit et de suivre l'évolution éventuelle de cette vitesse. Cette valeur est égale au quotient de la distance d séparant les deux axes des organes de détection par le retard $\tau = 203\theta$ (ou $\theta$ est la période de l'horloge) lorsque les deux valeurs calculées de la fonction de corrélation sont identiques. En effet, ces valeurs correspondent à des points de la courbe représentative de la fonction d'intercorrélation situés de part et d'autre et à égale distance du pic de corrélation de ladite courbe, laquelle est symétrique par rapport à ce pic. Si "f" est la fréquence correspondante de l'horloge,

$$\left(\theta = \frac{1}{f}\right),$$

on a:

$$v = \frac{d}{203} f.$$

Le choix des deux sorties de prélèvement du signal X(t) retardé sur deux étages séparés par un nombre impair d'étages permet d'obtenir un facteur de division entier. La vitesse peut dont être inscrite sur le dispositif d'affichage 15 relié à l'horloge 9, et/ou introduit directement comme donnée dans un système d'automatisation. Il est également possible d'adjoindre au dispositif une sortie analogique pour l'enregistrement de la vitesse.

La fonction de transfert de l'unité d'intégration 12 s'écrit, de façon bien connue:

$$V_s = -\frac{1}{R.C}\int_o^t V_e dt \qquad (1)$$

Où $V_s$ est l'intégrale vraie du signal d'entrée $V_3$ affectée du coefficient

$$\frac{1}{RC}.$$

Ce coefficient définit le gain de boucle d'asservissement.

L'invention cherche à rendre ce gain proportionnel à la vitesse du produit lorsque celle-ci varie. Pour ce faire, on associe les moyens d'intégration à un système d'asservissement du gain qui a une entrée annexe sur laquelle on peut faire varier le gain en y appliquant une tension variable W proportionnelle à la vitesse du produit, délivrée par les moyens de mesure 16 indépendants du corrélateur.

Selon l'invention, ce système d'asservissement du gain peut présenter trois variantes différentes de réalisation, respectivement schématisés sur les figures 2, 3 et 4.

Sur la figure 2, le système précité est référencé en 17: il s'agit d'un multiplieur. De préférence son facteur d'échelle K sera déterminé de façon que le gain puisse varier de 0 à 1. L'ensemble réalisé par le système 17 et les moyens d'intégration (ou intégrateur) désignés globalement en 18, constitue l'unité d'intégration 12 (voir figure 1).

Théoriquement, l'ordre des éléments importe peu, pratiquement il est plus judicieux, comme le montre la figure 2, de placer la multiplieur 17 à la sortie des moyens d'intégration. Les multiplieurs sont en effet des dispositifs à bande passante assez faible, donc inadaptés à suivre des variations très rapides. Or, c'est bien sous cette forme que se présente le signal avant intégration puisqu'il est de nature statistique. Au contraire à la sortie des moyens d'intégration, le signal varie relativement plus lentement puisqu'il est l'image des variations de vitesse du produit.

Le signal de sortie $U_s$ de l'unité d'intégration 12 s'écrit alors

$$U_s = KW . V_s \qquad (1)$$

d'où, compte tenu de la relation (1)

$$U_s = \frac{KW}{RC}\int_o^t V_e dt \qquad (2)$$

Selon une autre forme de mise en oeuvre de l'invention, on peut faire varier le gain de boucle du corrélateur en agissant, cette fois, non plus sur le signal, au moyen d'un facteur multiplicatif proportionnel à la vitesse du produit en défilement, mais sur la constante de temps R.C. de l'intégrateur lui-même de manière à la rendre inversement proportionnelle à ladite vitesse. Pour se faire, on peut asservir soit la partie résistive R de la constante de temps (figure 3), soit sa partie capacitive C (figure 4), soit ces deux parties simultanément.

Conformément au schéma de la figure 3, on asservit la partie résistive R de l'unité d'intégration 12 à l'aide d'une thermistance désignée en 19 dont le courant de chauffe W, proportionnel à la vitesse du produit, est fourni par les moyens de mesure 16 indépendants du corrélateur (figure 1).

Un autre variante consiste à asservir la capacité C de la constante de temps d'une intégration, comme indiqué plus haut. On est alors amené, comme le montre la figure 4, à agir sur la capacité de façon discrète au moyen d'une batterie 20 de condensateurs montés en parallèle. Les capacités $C_1$, $C_2$, $C_3$, différentes l'une de l'autre, s'étagent de façon à couvrir au mieux la plage des vitesses dans laquelle peut se situer celle du produit en défilement. En fonction de la valeur de cette vitesse, une unité de commande 21 à seuils multiples étagés active le condensateur le mieux approprié, à partir du signal W fourni par les moyens de mesure 16 indépendants du corrélateur (figure 1).

**Revendications**

1. Dispositif de mesure de vitesse d'un produit en défilement comprenant:

— deux organes de détection (1, 2) situés en face du produit et décalés dans l'espace, dans le sens du défilement du produit, lesdits organes de détection fournissant deux signaux aléatoires décalés dans le temps et liés au produit en défilement,

— deux unités de mise en forme (4) dont chacune reçoit l'un des signaux aléatoires,

— un corrélateur (13) branché aux sorties desdites unités (4) et comportant successivement:

   — un registre à décalage (8) recevant le signal de sortie d'une desdites unités (4), ledit registre ayant deux sorties de prélèvement sur deux étages non-consécutifs,

   — un étage de multiplication (10) servant à multiplier chacun des signaux provenant de la première et de la deuxième sorties du registre à décalage (8) avec le signal de sortie de l'autre desdites unités (4),

   — un amplificateur différentiel (11) recevant les deux produits formés par l'étage de multiplication (10),

   — un intégrateur (18) branché à la sortie de l'amplificateur différentiel (11),

— des moyens de mesure de vitesse (16) indépendants du corrélateur fournissant une valeur approximative de la vitesse du produit,

— une boucle d'asservissement du retard du registre à décalage (8) au signal de sortie du corrélateur comprenant:

   — un sommateur (14) dont une entrée est connectée à la sortie de l'intégrateur (18) et dont une autre entrée est connectée à la sortie desdits moyens (16),

   — un convertisseur tension-période (9) dont l'entrée est connectée à la sortie du sommateur (14) et dont la sorite est connectée au registre à décalage (8),

   — un indicateur de vitesse (15) du produit relié audit convertisseur (9) caractérisé par,

— un système pour asservir le gain de boucle d'asservissement (9, 14) à la vitesse du produit (3), ledit système comportant un multiplieur (17) dont une entrée est reliée à la sortie de l'intégrateur (18), l'autre entrée étant reliée à la sortie des moyens de mesure de vitesse (16) et dont la sortie est reliée à l'entrée du sommateur (14).

2. Dispositif de mesure de vitesse d'un produit en défilement comprenant:

— deux organes de détection (1, 2) situés en face du produit et décalés dans l'espace, dans le sens du défilement du produit, lesdits organes de détection fournissant deux signaux aléatoires décalés dans le temps et liés au produit en défilement,

— deux unités de mise en forme (4) dont chacune reçoit l'un des signaux aléatoires,

— un corrélateur (13) branché aux sorties desdites unités (4) et comportant successivement:

   — un registre à décalage (8) recevant le signal de sortie d'une desdites unités (4), ledit registre ayant deux sorties de prélèvement sur deux étages non-consécutifs,

   — un étage de multiplication (10) servant à multiplier chacun des signaux provenant de la première et de la deuxième sorties du registre à décalage (8) avec le signal de sortie de l'autre desdites unités (4),

   — un amplificateur différentiel (11) recevant les deux produits formés par l'étage de multiplication (10),

   — un intégrateur (12) branché à la sortie de l'amplificateur différentiel (11),

— des moyens de mesure de vitesse (16) indépendants du corrélateur fournissant une valeur approximative de la vitesse du produit,

— une boucle d'asservissement du retard du registre à décalage (8) au signal de sortie du corrélateur comprenant:

   — un sommateur (14) dont une entrée est connectée à la sortie de l'intégrateur (12) et dont une autre entrée est connectée à la sortie desdits moyens (16),

   — un convertisseur tension-période (9) dont l'intrée est connectée à la sortie du sommateur (14) et dont la sortie est connectée au registre à décalage (8),

— un indicateur de vitesse (15) du produit relié audit convertisseur (9) caractérisé par,

— un système pour asservir le gain de boucle d'asservissement (9, 14) à la vitesse du produit (3), ledit système comportant une thermistance (19, R) ladite thermistance constituant la partie résistive de l'intégrateur (12), les moyens de mesure de vitesse (16) fournissant un courant de chauffe pour la thermistance (19, R).

3. Dispositif de mesure de vitesse d'un produit en défilement comprenant:

— deux organes de détection (1, 2) situés en face du produit et décalés dans l'espace, dans le sens du défilement du produit, lesdits organes de détection fournissant deux signaux aléatoires décalés dans le temps et liés au produit en défilement,

— deux unités de mise en forme (4) dont chacune reçoit l'un des signaux aléatoires,

— un corrélateur (13) branché aux sorties desdites unités (4) et comportant successivement:

— un registre à décalage (8) recevant le signal de sortie d'une desdites unités (4), ledit registre ayant deux sorties de prélèvement sur deux étages non-consécutifs,

— un étage de multiplication (10) servant à multiplier chacun des signaux provenant de la première et de la deuxième sorties du registre à décalage (8) avec le signal de sortie de l'autre desdites unités (4),

— un amplificateur différentiel (11) recevant les deux produits formés par l'étage de multiplication (10),

— un intégrateur (R, 20) branché à la sortie de l'amplificateur différentiel (11),

— des moyens de mesure de vitesse (16) indépendants du corrélateur fournissant une valeur approximative de la vitesse du produit,

— une boucle d'asservissement du retard du registre à décalage (8) au signal de sortie du corrélateur comprenant:

— un sommateur (14) dont une entrée est connectée à la sortie de l'intégrateur (R, 20) et dont une autre entrée est connectée à la sortie desdits moyens (16),

— un convertisseur tension-période (9) dont l'entrée est connectée à la sortie du sommateur (14) et dont la sortie est connectée au registre à décalage (8),

— un indicateur de vitesse (15) du produit relié audit convertisseur (9) caractérisé par,

— un système pour asservir le gain de boucle d'asservissement (9, 14) à la vitesse du produit (3), ledit système comportant:

— une batterie (20) de condensateurs montés en parallèle et de capacités (C1, C2, C3) différentes entre-elles, ladite batterie constituant la partie capacitive de l'intégrateur (R, 20),

— et une unité (21) à seuils multiples pour activer l'un ou l'autre desdits condensateurs en fonction du signal fourni par les moyens de mesure de vitesse (16).

**Patentansprüche**

1. Vorrichtung zur Messung der Geschwindigkeit eines an der Vorrichtung vorbeibewegten Körpers, bestehend aus:

— zwei dem Körper zugewandten, in Bewegungsrichtung des Körpers räumlich versetzt angeordneten Empfängerorganen (1, 2), die zwei zeitlich verschobene, durch den bewegten Körper hervorgerufene zufällige Signale abgeben,

— zwei Impulsformern (4), deren jeder eines der beiden zufälligen Signale aufnimmt,

— einer an die Ausgänge der beiden Impulsformer (4) angeschlossenen Korrelationsanordnung (13), die ihrerseits aus folgenden hintereinander angeordneten Elementen besteht:

— einem das Ausgangssignal eines der beiden Impulsformer (4) aufnehmenden Schieberegister (8), das zwei Leseausgänge an zwei nicht-aufeinanderfolgenden Stufen aufweist,

— einer Multiplikationsstufe (10), in der jedes der beiden von einem der beiden Leseausgänge des Schieberegisters (8) abgegebenen Signale mit dem vom Ausgang des anderen Impulsformers (4) abgegebenen Signal multipliziert wird,

— einem mit den beiden durch die Multiplikationsstufe (10) gebildeten Produktsignalen beaufschlagten Differenzverstärker (11),

— einem an den Ausgang des Differenzverstärkers (11) angeschlossenen Integrierer (18),

— einer von der Korrelationsanordnung (13) unabhängigen Geschwindigkeitsmeßanordnung (16) zur Ermittlung eines Näherungswerts der Geschwindigkeit des Körpers,

— einer die Verzögerung des Schieberegisters (8) nach Maßgabe des Ausgangssignals der Korrelationsanordnung (13) steuernden-Regelschleife, die ihrerseits enthält:

— einen Summierer (14), dessen einer Eingang mit dem Ausgang des Integrierers (18) und dessen anderer Eingang mit dem Ausgang der Geschwindigkeitsmeßanordnung (16) verbunden ist.

— einen Spannungs-Frequenz-Wandler (9), dessen Eingang mit dem Ausgang des Summierers (14) und dessen Ausgang mit dem Schieberegister (8) verbunden ist,

— einer mit dem Spannungs-Frequenz-Wandler (9) verbundenen Einrichtung (15) zur Anzeige der Geschwindigkeit des Körpers, gekennzeichnet durch

13 **0 009 452** 14

— eine Anordnung zur Steuerung der Verstärkung der Regelschleife (9, 14) nach Maßgabe der Geschwindigkeit des Körpers (3), die einen Multiplizierer (17) aufweist, dessen einer Eingang mit dem Ausgang des Integrierers (18) und dessen anderer Eingang mit der Geschwindigkeitsmeßanordnung (16) und dessen Ausgang mit dem Eingang des Summierers (14) verbunden ist.

2. Vorrichtung zur Messung der Geschwindigkeit eines an der Vorrichtung vorbeibewegten Körpers, bestehend aus:

— zwei dem Körper zugewandten, in Bewegungsrichtung des Körpers räumlich versetzt angeordneten Empfängerorganen (1, 2), die zwei zeitlich verschobene, durch den bewegten Körper hervorgerufene zufällige Signale abgeben,
— zwei Impulsformern (4), deren jeder eines der beiden zufälligen Signale aufnimmt,
— einer an die Ausgänge der beiden Impulsformer (4) angeschlossenen Korrelationsanordnung (13), die ihrerseits aus folgenden hintereinander angeordneten Elementen besteht:
  — einem das Ausgangssignal eines .der beiden Impulsformer (4) aufnehmenden Schieberegister (8), das zwei Leseausgänge an zwei nicht-aufeinanderfolgenden Stufen aufweist,
  — einer Multiplikationsstufe (10), in der jedes der beiden von einem der beiden Leseausgänge des Schieberegisters (8) abgegebenen Signale mit dem vom Ausgang des anderen Impulsformers (4) abgegebenen Signal multipliziert wird,
  — einem mit den beiden durch die Multiplikationsstufe (10) gebildeten Produktsignalen beaufschlagten Differenzverstärker (11),
  — einem an den Ausgang des Differenzverstärkers (11) angeschlossenen Integrierer (12),
  — einer von der Korrelationsanordnung (13) unabhängigen Geschwindigkeitsmeßanordnung (16) zur Ermittlung eines Näherungswerts der Geschwindigkeit des Körpers,
— einer die Verzögerung des Schieberegisters (8) nach Maßgabe des Ausgangssignals der Korrelationsanordnung (13) steuernden Regelschleife, die ihrerseits enthält:
  — einen Summierer (14), dessen einer Eingang mit dem Ausgang des Integrierers (12) und dessen anderer Eingang mit dem Ausgang der Geschwindigkeits meßanordnung (16) verbunden ist,
  — einen Spannungs-Frequenz-Wandler (9), dessen Eingang mit dem Ausgang des Summierers (14) und dessen Ausgang mit dem Schieberegister (8) verbunden ist,
  — einer mit dem Spannungs-Frequenz-Wandler (9) verbundenen Einrichtung (15) zur Anzeige der Geschwindigkeit des Körpers, gekennzeichnet durch
— eine Anordnung zur Steuerung der Verstärkung der Regelschleife (9, 14) nach Maßgabe der Geschwindigkeit des Körpers (3), die einen Thermistor (19, R) aufweist, der den Widerstandsteil des Integrierers (12) bildet und der durch einen von der Geschwindigkeitsmeßanordnung (16) erzeugten Heizstrom (W) heizbar ist.

3. Vorrichtung zur Messung der Geschwindigkeit eines an der Vorrichtung vorbeibewegten Körpers, bestehend aus:

— zwei dem Körper zugewandten, in Bewegungsrichtung des Körpers räumlich versetzt angeordneten Empfängerorganen (1, 2), die zwei zeitlich verschobene, durch den bewegten Körper hervorgerufene zufällige Signale abgeben,
— zwei Impulsformern (4), deren Jeder eines der beiden zufälligen Signale aufnimmt,
— einer an die Ausgänge der beiden Impulsformer (4) angeschlossenen Korrelationsanordnung (13), die ihrerseits aus folgenden hintereinander angeordneten Elementen besteht:
  — einem das Ausgangssignal eines der beiden Impulsformer (4) aufnehmenden Schieberegister (8), das zwei Leseausgänge an zwei nicht-aufeinanderfolgenden Stufen aufweist,
  — einer Multiplikationsstufe (10), in der jedes der beiden von einem der beiden Leseausgänge des Schieberegisters (8) abgegebenen Signale mit dem vom Ausgang des anderen Impulsformers (4) abgegebenen Signal multipliziert wird,
  — einem mit den beiden durch die Multiplikationsstufe (10) gebildeten Produktsignalen beaufschlagten Differenzverstärker (11),
  — einem an den Ausgang des Differenzverstärkers (11) angeschlossenen Integrierer (R, 20),
— einer von der Korrelationsanordnung (13) unabhängigen Geschwindigkeitsmeßanordnung (16) zur Ermittlung eines Näherungswerts der Geschwindigkeit des Körpers,
— einer die Verzögerung des Schieberegisters (8) nach Maßgabe des Ausgangssignals der Korrelationsanordnung (13) steuernden Regelschleife, die ihrerseits enthält:
  — einen Summierer (14), dessen einer Eingang mit dem Ausgang des Integrierers (R, 20) und dessen anderer Eingang mit dem Ausgang der Geschwindigkeitsmeßanordnung (16) verbunden ist,
  — einen Spannungs-Frequenz-Wandler (9), dessen Eingang mit dem Ausgang des Summierers (14) und dessen Ausgang mit dem Schieberegister (8) verbunden ist,

—einer mit dem Spannungs-Frequenz-Wandler (9) verbundenen Einrichtung (15) zur Anzeige der Geschwindigkeit des Körpers, gekennzeichnet durch
— eine Anordnung zur Steuerung der Verstärkung der Regelschleife (9, 14) nach Maßgabe der Geschwindigkeit des Körpers (3), die
— eine den kapazitiven Teil des Integrierers (R, 20) bildende Gruppe (20) von parallel geschalteten Kondensatoren unterschiedlicher Kapazität (C1, C2, C3) und
— eine Schaltungsanordnung (21) mit mehreren Schwellen zur Aktivierung des einen oder anderen Kondensators in Abhängigkeit des von der Geschwindigkeitsmeßanordnung (16) erzeugten Signals aufweist.

## Claims

1. A system for measuring the speed of a product in motion, including:

— two detection elements (1, 2) opposite the product and spatially offset in the direction of motion, the said detection elements outputting two random offset timeshifted signals, and linked with the product in motion,
— two shaping networks (4), reach receiving one of the random signals,
— a correlator (13), connected to the outputs of said elements (4), comprising, successively:
— a shift register (8), receiving the output signal from one of the said elements (4), this register having two sampling outputs at two non-consecutive stages,
— a multiplier stage (10), that multiplies each signal incoming from the first and second outputs of the shift register (8) together with the output signal from the other said element (4),
— a differential amplifier (1), receiving the two products resulting from the multiplier stage (10),
— an integrator (18), connected to the output of the differential amplifier (11),
— speed measuring means (16), separate from the correlator, giving the approximate speed of the product,
— a servo-loop that controls the shift-register (8) delay with the correlator output signal, comprising:
— a summator meter (14), one iput of which is connected to integrator output (18), and another one to the output of the said speed-measuring means (16),
— a voltage-period converter (9), the input of which is connected to the summation-meter output (14) and the output of which, in turn, is connected to the shift register (8),
— a speed indicator (15), showing the speed of the product, and connected to the said converter (9), characterised by:
— a system that slaves the servo-loop gain (9, 14) to the speed of the product (3), the said system including a multiplier (17) an input of which is connected to the integrator output (18) and the other input to the output of the speed-measuring means (16) and the multiplier output to the summation meter (14).

2. A system for measuring the speed of a product in motion, including:

— two detection elements (1, 2) opposite the product and spatially offset in the direction of motion, the said detection elements outputting two random offset time-shifted signals, and linked with the product in motion,
— two shaping networks (4) each receiving one of the random signals,
— a correlator (13), connected to the outputs of said element (4), comprising, successively:
— a shift register (8), receiving the output signal from one of the said elements (4), this register having two sampling outputs at two non-consecutive stages,
— a multiplier stage (10), that multiplies each signal incoming from the first and second outputs of the shift register (8) together with the output signal from the other said element (4),
— a differential amplifier (11), receiving the two products resulting from the multiplier stage (10),
— an integrator (12), connected to the output of the differential amplifier (11),
— speed-measuring means (16), separate from the correlator, giving the approximate speed of the product,
— a servo-loop that controls the shift-register (8) delay with the correlator output signal comprising:
— a summation meter (14), one input of which is connected to integrator output (12), and another one to the output of the said speed-measuring means (16),
— a voltage-period converter (9), the input of which is connected to the summation meter output (14) and the output of which, in turn, is connected to the shift register (8),
— a speed indicator (15), showing the speed of the product, and connected to the said converter (9), characterised:
— a system that slaves the servo-loop gain (9, 14) to the speed of the product (3), the said system comprising a thermistor (19, R) which makes up the resistive section of the integrator (12), the speed-measuring means (16) supplying the heating current to the thermistor (19, R).

3. A system for measuring the speed of a product in motion, comprising:

— two detection elements (1, 2) opposite the product and spatially offset in the direction of motion, the said detection elements outputting two random offset time-shifted signals, and linked with the product in motion,

— two shaping networks (4) each receiving one of the random signals,

— a correlator (13), connected to the outputs of said element (4), comprising, successively:

— a shift register (8), receiving the output signal from one of the said elements (4), this register having two sampling outputs at two non-consecutive stages,

— a multiplier stage (10), that multiplies each signal coming from the first and second outputs of the shift register (8), together with the output signal from the other said element (4),

— a differential amplifier (11), receiving the two products resulting from the multiplier stage (10),

— an integrator (R, 20), connected to the output of the differential amplifier (11),

— speed-measuring means (16), separate from the correlator giving the approximate speed of the product,

— a servo-loop that controls the shift-register (8) delay with the correlator output signal comprising:

— a summation meter (14), one input of which is connected to integrator output (R20), and another one to the output of the said speed-measuring means (16),

— a voltage-period converter (9), the input of which is connected to the summation-meter output (14), and the output of which, in turn, is connected to the shift register (8),

— a speed indicator (15), showing the speed of the product, and connected to the said converter (9), characterised by:

— a system that slaves the servo-loop gain (9, 14), to the speed of the product (3), the said system including:

— a bank of capacitors (20) connected in parallel, all with different capacitances (C1, C2, C3), this bank making up the capacitive section of the integrator (R, 20) and,

— a multiple-threshold (21) for activating any of these capacitors in terms of the signal from the speed-measuring means (10).

Fig_1_

**0 009 452**

Fig_2_

Fig_3_

Fig_4_